Europäisches Patentamt

European Patent Office

Office européen des brevets

(11) Publication number : **0 649 265 A1**

(12) **EUROPEAN PATENT APPLICATION**

(21) Application number : 94307492.2

(22) Date of filing : 12.10.94

(51) Int. Cl.$^6$ : **H04Q 3/00**

(30) Priority : 18.10.93 GB 9321478
29.04.94 GB 9408632

(43) Date of publication of application :
19.04.95 Bulletin 95/16

(84) Designated Contracting States :
AT BE CH DE DK ES FR GB GR IE IT LI LU MC
NL PT SE

(71) Applicant : CABLE & WIRELESS PLC
124 Theobalds Road
London WC1X 8RX (GB)

(72) Inventor : Hobbs, Stephen Edward
129 First Avenue
Gillingham, Kent ME7 2LF (GB)
Inventor : Anius, Patson Norbert
Sunnydean,
Parfitts Hill
Saint George, Bristol, BS5 8BN (GB)

(74) Representative : Skone James, Robert
Edmund
GILL JENNINGS & EVERY
Broadgate House
7 Eldon Street
London EC2M 7LH (GB)

(54) **Telephone call handling system.**

(57) A communications system providing a call routing service in which each subscriber registered with the system is allocated a unique, published subscriber identification number (SID). The system comprises :

i) a central database (CD) containing one or more fixed records for each subscriber registered with the system, each record corresponding to a particular subscriber having an address which includes the SID of that subscriber ; and

ii) one or more local databases (LD), each containing a memory location permanently associated with a respective registered subscriber, and containing current call routing information for the subscriber.

Each fixed record in the central database (CD) includes the location of the local database containing the respective subscriber's call routing information, and the or each local database (LD) is constructed to allow the current call routing information in the local database to be updated by the subscriber.

Fig.1.

EP 0 649 265 A1

The present invention relates to a communication system, and methods of operating the system. In particular it relates to a system in which a subscriber can define and control the routing of calls dialled using a particular number.

A desirable feature of an integrated communication system is the ability to provide number translation. Where the number dialled to reach a terminating address (such as a telephone, fax or computer) does not define that terminating address, the number must be "translated" into a number that does provide all of the information required to connect the call. In other words the system must provide call routing information, using the dialled number as a key to obtain that information.

It is also desirable for that call routing information to be subscriber definable, i.e. subscribers can easily define/control the call routing information from a remote device and do not need to deal with this via the system provider.

Subscriber definable call routing allows a number of different applications to be supported by the system. A typical example is Personal Numbering - whereby a registered subscriber has a personal number which can be dialled to reach the subscriber regardless of his location. A Personal Numbering system gives even greater flexibility than a mobile phone network (in which the subscriber must carry his handset with him at all times if he wishes to be contacted). The aim of a Personal Numbering system is to allow a subscriber to specify the terminating address to which all of his incoming calls (dialled using a unique personal number -PN) are routed. Therefore if the subscriber visits a hotel, he may specify the hotel telephone as his current telephone terminating address. Alternatively, the subscriber may specify his mobile telephone as his current telephone terminating address.

A conventional call forwarding system for implementing personal numbering is disclosed in US-A-4313035. A single central database contains each subscriber's call forwarding number, which may be updated by the subscriber from any telephone. An incoming call using the subscriber's personal number is translated to the current call forwarding number, and is routed to the subscriber's current terminating address. One of the disadvantages of this system is that the single central database has to store all of the subscriber's information and handle both call routing and location updating procedures and can suffer significant disruption if changes to the system must be made. This results in a system that is expensive and inflexible.

US5239577 describes a network for providing cross-context connections between subscribers. The system essentially provides a translation from a known first service number to an unknown second service number. For example if subscriber A knows subscriber B's home telephone number, but wants to send a fax to subscriber B's home fax (the number of which he does not know), the system allows subscriber A to enter subscriber B's home telephone number, and routes the fax to the required fax number. The system comprises a central linking database, and a number of local directory databases, each for a different service, containing mappings between subscribers and their respective numbers. Where subscriber A wishes to call subscriber B's cellular phone by specifying the number of subscriber B's business phone, the system carries out a number of steps as follows:

(1) Subscriber A calls a special number to access the cross-context system.

(2) The system requests which service type is required.

(3) Subscriber A enters a digit "3" to indicate that a cellular phone is required.

(4) Subscriber A enters a source data element. This can be any number associated with subscriber B that subscriber A knows. In this case it is subscriber B's business phone number.

(5) The system interrogates a first centralised database to obtain the address of the business associated with the business phone number.

(6) The system interrogates the local directory database associated with this business and obtains a unique personal identification number associated with the subscriber B.

(7) The system interrogates a second central database (the linking database) using the personal identification number. The linking database has an entry for each subscriber, accessed by the subscriber's personal identification number. Each entry contains the addresses of a number of local directory databases (including the database interrogated in step 6), each containing subscriber B's number for a different respective service type (eg home phone number, business fax number etc). In this case the linking database provides the address of a local directory database containing a number of cellular phone numbers (including subscriber B's).

(9) The system accesses the cellular phone directory using subscriber B's personal identification number and obtains the relevant cellular phone number.

(10) The system routes the call using the obtained cellular phone number.

This system does not provide a service for subscriber definable call routing in the context of the present invention. It also requires a number of complex steps as outlined above in order to obtain the personal identification number, and route the call. The personal identification number is not known by the subscriber or anybody who wishes to call him. It is internal to the system.

In accordance with a first aspect of the present invention, we provide a communications system providing a call routing service in which each subscriber registered with the system is allocated a unique, published subscriber identification number (SID), the system comprising;

i) a central database containing one or more fixed records for each subscriber registered with the system, each record corresponding to a particular subscriber having an address which includes the SID of that subscriber; and

ii) one or more local databases, each containing a memory location permanently associated with a respective registered subscriber, and containing current call routing information for the subscriber,

wherein each fixed record in the central database includes the location of the local database containing the respective subscriber's call routing information, and wherein the or each local database is constructed to allow the current call routing information in the local database to be updated by the subscriber.

The SID need not be "published" in the widest sense of the word (for instance printed in a phone directory). At the minimum the SID will be known by the subscriber and anyone who wishes to use the system to place a call to the subscriber using the call routing service.

Applications of the present invention include 0800-number routing, where the subscriber (who is an 0800 service provider) can update the call routing information for his allocated 0800 number. In this case the number will comprise 0800 - followed by the subscriber's SID. In addition the present invention covers personal numbering. For simplicity the remainder of the specification will primarily address the Personal Numbering application.

In the Personal Numbering application, each subscriber can be reached by dialling a personal number (comprising the SID) which is used to index the central database. Therefore if, for example, the subscriber changes home address he can specify the telephone in his new house as being his current terminating address. The personal numbering system also allows a person to be contacted who does not own a phone or fax, by designating for instance his next door neighbour's phone/fax as his terminating address. The present invention does not require the various look-up steps involved in obtaining the personal identification number in US 5239577.

In contrast to the call forwarding system disclosed in US-A-4313035 (which used a single central database containing subscriber definable call routing information), the present invention uses distributed (or decentralised) intelligence between the central and local database/s. Although the information in the central database is typically not user definable, the invention allows further services/applications to be added easily to the system, for example by adding further local databases without disruption to the system. These can be fully set up "off line" and then connected relatively quickly to the central database.

Where only a small number of subscribers are registered with the system (less than 50,000) then only a single local database will be required. Typically however, the system requires a plurality of local databases.

The current call routing information defines the current terminating address to which all incoming calls to the subscriber are routed. The current terminating address may be a telephone, fax or computer.

Typically each local database has a plurality of subscribers associated with it, some or all of whom may be all or part of a single Closed User Group (CUG).

Typically, the central database will be located at a single location, although it could be distributed over a number of locations. The central database and local databases may be located in the same country, or one or more of the local databases may be provided in countries different from the other local databases and/or central database.

Typically, the system further comprises a plurality of Transit Switching Points (TSPs) which provide connections between the system and a Public Switched Telephone Network (PSTN). The system also typically comprises one or more Voice Mail Systems (VMSs) which the subscriber calls to update his current call routing information.

The system may contain a number of local databases, each for a different service (for instance telephone, fax, computer data etc.). In this case the central database will hold a fixed record (comprising an address including the subscriber's SID and the local database location) for each service provided to the subscriber.

According to a second aspect of the present invention, we provide a method of obtaining a subscriber's call routing information in a system according to the first aspect of the invention, comprising the steps of;

(i) receiving an incoming call dialled using an access number comprising the subscriber's SID;

(ii) obtaining the location of the local database permanently associated with the access number by interrogating the corresponding fixed record in the central database; and

ii) obtaining the subscriber's current call routing information by interrogating the corresponding memory location in the local database.

According to a third aspect of the present invention, we provide a method of routing a call using a system according to the first aspect of the invention, comprising establishing a connection with the system via a telephone network by dialling an access number comprising a subscriber's SID, whereby the system causes the call to be routed in accordance with the subscriber's current call routing information.

The access number may be a universally usable number (0800 in the UK), a closed user group (CUG) number or a personal number.

Typically for the personal numbering application the access number further comprises a service identifier portion (identifying the call for personal numbering telephone, fax or e-mail services).

According to a fourth aspect of the present invention, we provide a method of operating a system according to the first aspect of the present invention, comprising detecting an incoming call containing an access number comprising a subscriber's SID, carrying out a method according to the second aspect of the invention to obtain the subscriber's current call routing information by accessing the fixed record in the central database corresponding to the access number; and routing the incoming call in accordance with the subscriber's current call routing information.

The call routing is typically handled by a transit switching point (TSP) which may re-route the call itself in accordance with the routing information. Preferably however, the TSP drops the call back to the or a preceding PSTN node (e.g. switch) for re-routing through the PSTN.

According to a fifth aspect of the present invention, a method of operating a system according to the first aspect of the invention comprises updating a subscriber's current call routing information in response to an updating signal either originating from the subscriber or generated automatically in a predetermined manner.

The local database may be updated periodically in a predetermined manner. For example, the subscriber's incoming telephone calls may be automatically routed to his work number during office hours, and to his home number outside office hours. If the subscriber has a number of personal numbering services, then these services may be regularly updated in different ways. For instance, his telephone routing information may be regularly updated as above, whilst his incoming fax/e-mail is routed to his office during the week, and to his home at weekends.

Alternatively or additionally, according to a sixth aspect of the invention we provide a method of updating a subscriber's current call routing information in a system according to the first aspect of the invention comprising making a call to the system, and transmitting data defining the subscriber's new call routing information, whereby the subscriber's local database is updated with the new call routing information.

The subscriber can make his call from any terminating device (eg telephone or computer) in the PSTN, and may specify any terminating address, for example his current location in the case of personal numbering (not necessarily the address from which he makes the call), or the actual destination for an 0800 number.

The call may be made from within the same country as the system according to the present invention, or may be made from outside that country (or countries). Typically, the call is handled by a Voice Mail System provided by the system to the subscriber, which only updates the subscriber's local database when a number of verification procedures have been carried out.

A number of embodiments of the present invention will now be described with reference to the accompanying drawings, in which;

Figure 1 shows the overall architecture of the system;

Figure 2 shows a typical connection between the PSTN and a single TSP;

Figure 3 shows the contents of the central database;

Figure 4 shows the contents of one of the local databases;

Figure 5 is a Message Sequencing Diagram showing how an incoming call is handled;

Figure 5a shows the contents of a VMS 8a;

Figure 6 is a Message Sequencing Diagram showing a location updating procedure; and

Figure 7 shows an alternative system architecture.

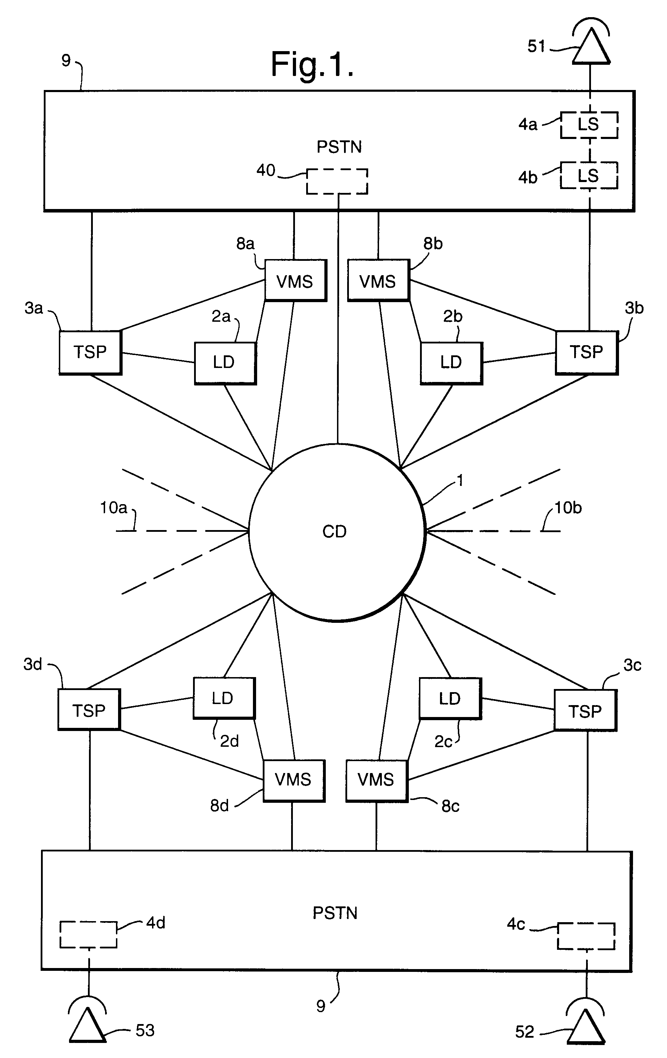

A typical system architecture is shown in Figure 1. A central data base (CD) 1 containing fixed subscriber information is connected to a plurality of local databases (LD) 2a-d. Each local database is connected to the Public Switched Telephone Network (PSTN) 9 via a Transit Switching Point (TSP) 3a-d, and Voice Mail System (VMS) 8a-d. The central database 1 may also be connected to the PSTN via a local switch or trunk node 40, which may perform the same function as the TSPs 3a-3d.

The local databases 2a-d and TSPs 3a-d may be provided as separate units but preferably each pair is integrated. Only four local databases 2a-d are shown, but more may be added (as indicated by the dotted lines 10a and 10b). The central database 1 is shown at a single location, although it may be distributed amongst a number of locations (typically a maximum of 2).

Each of the elements shown in Figure 1 also comprise a processor which carries out the various steps recited in the following description.

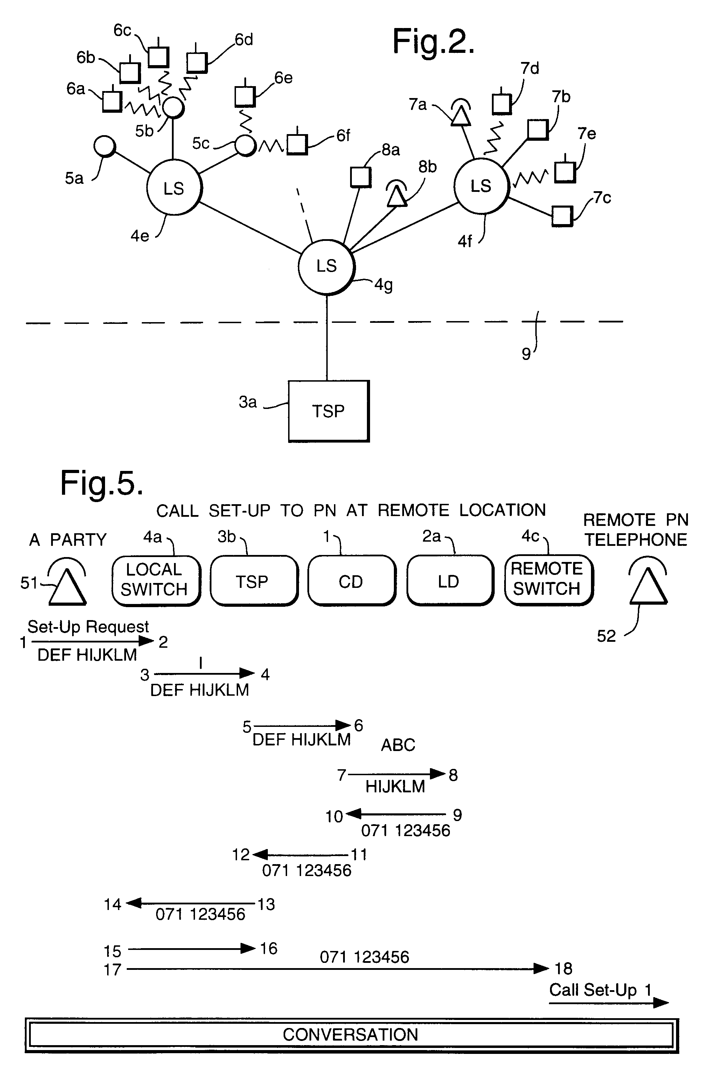

An example of an interconnection between the PSTN 9 and a single TSP 3a is shown in Figure 2. One of the TSP's functions is to act as a gateway switch between the System and the PSTN. The TSP 3a is connected to a local switch (LS) 4g which is provided in the conventional PSTN 9. In turn the local switch 4g is connected to a plurality of local switches, including 4e and 4f, as well as fax machines 8a, phones 8b etc. The local switch 4e is connected to a plurality of base stations 5a-c which connect to a number of mobile telephones 6a-f. The local switch 4f is connected to three fixed elements, namely a telephone 7a, fax 7b and computer 7c, along with mobile phones 7d,7e.

Another function of the TSP is to determine the incoming call treatment, based on the capability of the preceding node as will be described below.

On customer subscription, the customer is permanently registered with a particular local database (for instance 2a), and is given a subscriber identification number (SID). This comprises part of a unique personal number (PN) which is dialled when a caller wishes to reach a particular subscriber. Typically the personal number comprises the SID, preceded by a two or three digit PN network identifier (for instance, PSTN trunk code assigned to the system) and a service identifier. International originated calls will still be required to prefix the PN with the registered home country code of the subscriber, e.g. +44 for the UK. The personal number will thereby follow the format shown below:

(CC) DE F HIJKLM
where:
CC is the country code
DE is the network identifier
F is the service identifier
HIJKLM is the SID.

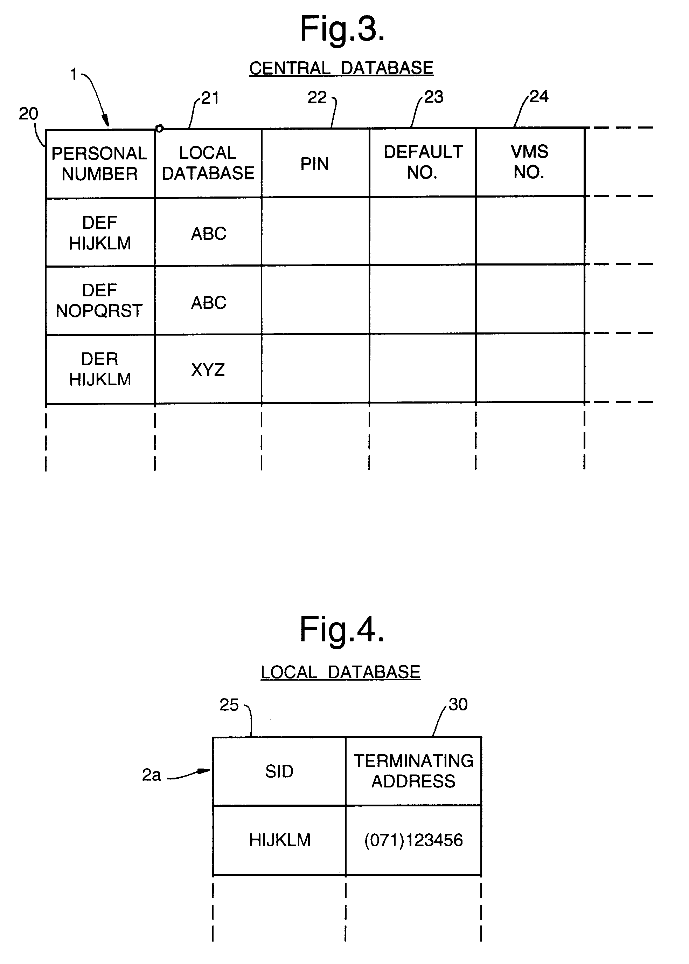

The contents of each subscriber's memory location or fixed record in the central database 1 is set up as shown in Figure 3. Associated with each personal number 20 is the location or address 21 of the local database (in the first case, local database 2a - identified by a three digit code ABC) permanently associated with that subscriber. The central database may also contain subscription information, including for instance a secret personal identification number (PIN) 22, default number 23, VMS number 24 etc.

The contents of one of the local databases 2a is shown in Figure 4. Typically, a number of subscribers are registered with any particular local database. The local database 2a contains the current call routing information 30 associated with each of the subscribers registered with it. The subscribers are identified by the SID portion 25 of their personal number (eg HIJKLM)). Alternatively the local database may contain the whole personal number at 25. Typically, the call routing information comprises a number which uniquely identifies the current terminating address of the subscriber. The local database 2a may also contain (not shown) subscriber information (eg PIN number) similar to the information 21-24 contained in the central database 1.

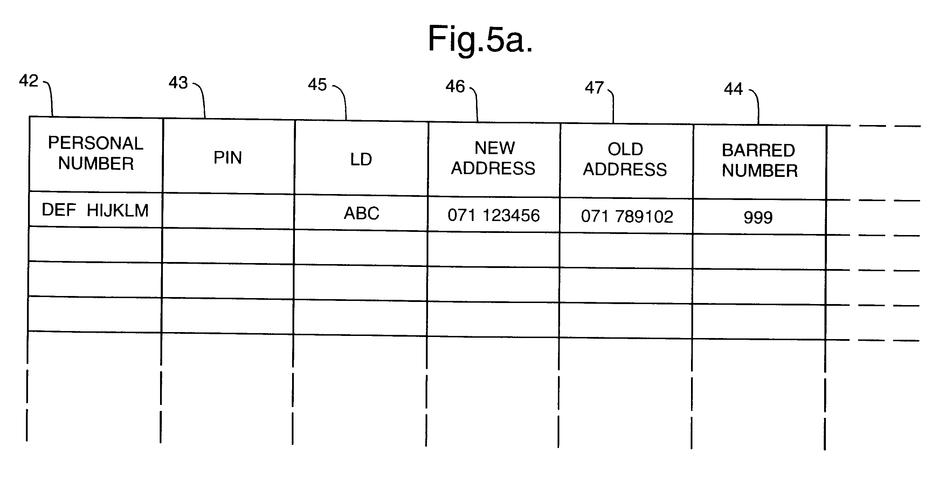

Figure 5 is a message sequence diagram showing the sequence of messages during an incoming call to a particular subscriber. In this example, the caller 51 (also shown in Figure 1) calls the subscriber HIJKLM, registered at the local database 2a, via his (the caller's) local switch 4a. The subscriber's current terminating address is the remote telephone 52, connected to remote switch 4c.

1. The Calling Party 51 initiates a call to the subscriber by dialling the required personal number DEF HIJKLM. If the calling party is not calling from the country within which the subscriber has registered, then the access number dialled is preceded by the international access code (CC). The call is then routed to the local switch 4a.

2. The Local Switch 4a analyzes the first digits dialled to determine onward routing. The network identifier digits DE identify the call as being a telephone call intended for a subscriber registered with the Personal Numbering system.

3. The Local Switch 4a routes the call to the nearest TSP 3b directly, or in this case via an intermediate PSTN switch 4b, or alternatively via an international gateway if the subscriber has registered in a foreign country.

The TSP 3b receives the personal number DEF HIJKLM, and Calling Line Identity CLI (if available).

4. The TSP 3b analyzes the first three digits (ie the network and service identifiers) to determine the necessary action.

5. The digits DEF indicate that call routing is to be suspended and a number translation is required. The TSP 3b requests the subscriber's call routing information by sending the dialled Personal Number DEF HIJKLM to the central database 1.

6. On receipt of the access number DEF HIJKLM the central database 1 checks its database for subscription information on this subscriber.

7. The central database 1 locates the fixed record corresponding to the dialled subscriber by comparing the dialled personal number with the stored numbers 20 (Figure 3). The central database then requests the subscriber's current call routing information from the subscriber's local database 2a whose address (ABC) is stored at 21, by sending the SID, in this case HIJKLM.

8. On receipt of the request, the local database 2a will look-up the appropriate record at address 25 (Figure 4) to determine the current terminating address 30 corresponding to the received personal number.

9. This required terminating address (071 123456 - corresponding to the telephone 52) is returned to the central database 1.

10. The central database 1 receives the terminating address (071 123456).

11. The central database 1 forwards the new terminating address with the subscriber's personal number and/or CLI to the TSP 3b.

12. On receipt of the terminating address from the central database 1, the TSP either attempts to route the call to the new terminating address 52 or drops the call back to the preceding switch or node 4a (or 4b) for re-routing. It is desirable to optimise on transmission link occupancy in order to make efficient use of the network. The basic principle is to always drop the call back as far as possible from the interrogating node, to the node nearest the calling customer capable of supporting the required protocol and the consequential rerouting of the call. The action taken will depend on the TSP incoming trunk data of the preceding switch. If the call is re-routed from the TSP 3b, then it acts as the executive point and generates a Call Detail Record (CDR).

13. In the case where the call can be dropped back, the TSP will send a message to the preceding switch 4a to indicate that the call must be rerouted from that switch. The message will contain the terminating address and the personal number in the CLI field.

14. The preceding switch 4a receiving the CDB message acts as the executive point and routes the call. This executive point will also generate the CDR.

15. In the case where a preceding switch does receive a CDB message it will forward release the circuit to the TSP 3b.

16. On receipt of a Circuit Release message, the TSP 3b will free all resources associated with the call according to the normal call release procedure.

17. The executive point of the call will complete the call to the Destination Address. If using the CCITT No. 7 protocol, then the PN will be in the CLI field with the Calling Line Identity Restriction (CLIR) set to null. Therefore the personal number may be displayed at the terminating address 52, thereby indicating the identity of the wanted party.

The subscriber's call routing information may be updated in a number of ways. For instance, the information may change periodically, based on the time of day, or may change to a default number at a particular time or in response to a signal from the central data base 1. Typically, however, the call routing information is updated by a subscriber from a remote telephone, using the subscriber's Voice Mail System (VMS).

The VMS is used to authenticate the subscriber and receives information on the current terminating address. The VMS will in turn transmit this new address to the subscriber's local database. The interface between the VMS and the local database will be dictated by the requirements of the particular local database. The VMS will additionally be used in the traditional sense as an answerphone. A subscriber may request that calls are unconditionally redirected to the respective mailbox number stored in the central database 1.

Figure 5a illustrates the contents of the VMS 8a.

The VMS database is addressed by each personal number 42 and stores at that address a number of items of subscriber information, including the subscriber's PIN number 43, and any other information such as barred numbers (in this case the subscriber is barred from defining 999 (the UK emergency code) as his terminating address). The VMS may also contain the local database address 45, and the new and old terminating addresses 46,47.

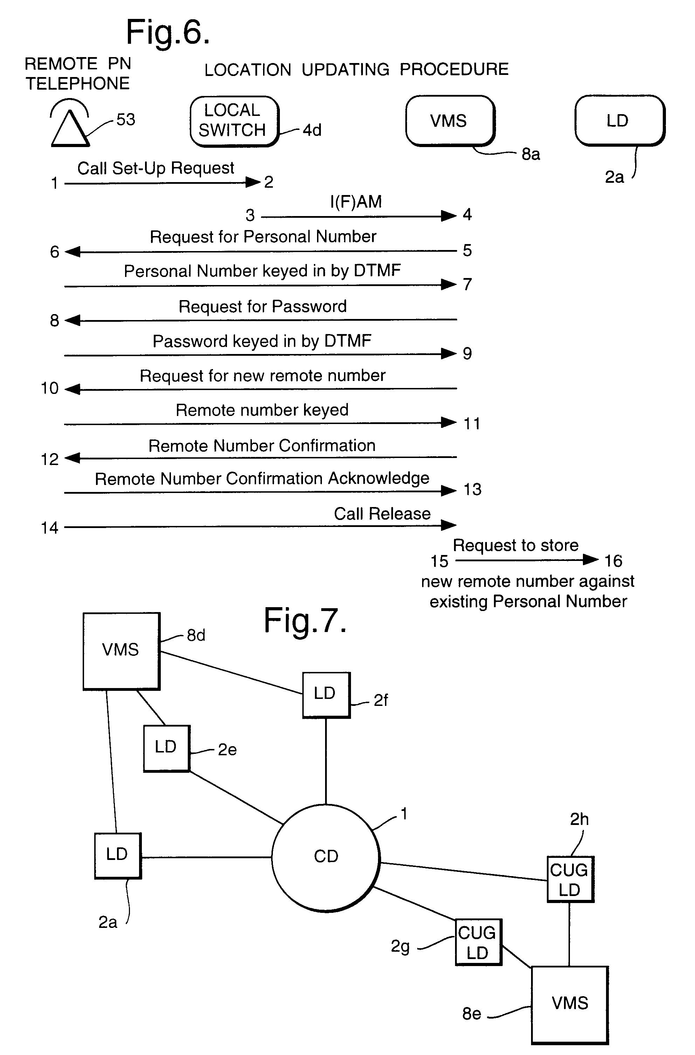

Figure 6 gives a description of the location updating procedure, in the form of a message sequencing diagram. Figure 6 shows a remote telephone 53 from which a subscriber updates his current location, a local switch 4d, connected to the telephone 53, and the subscriber's registered VMS 8a and local database 2a. These elements are also shown in Figure 1. A typical message sequence between the units is as follows:

1. When a subscriber wishes to change the terminating address, he can do so from any telephone or terminal, not just the terminal from which calls are required to terminate.

To change the terminating address, the subscriber simply dials a given Freephone Number from telephone 53, identifying his VMS 8a.

2. The Local Switch 4d recognises the Freephone number and has the call routed either directly or indirectly (via other switches) to the subscriber's VMS 8a.

3. The call set-up to the VMS 8a uses the normal PSTN and associated signalling protocol.

4. The VMS 8a recognises by the number dialled that the call is a request to change the terminating address of a particular subscriber, and invokes the required sub-routine.

5. Following normal call establishment between the VMS 8a and the subscriber, the VMS 8a voice prompts the subscriber to input the or one of his personal numbers.

6. The subscriber inputs his personal number (PN) eg DEF HIJKLM using the terminal's DTMF keypad or a personal tone generator.

7. On receipt of the PN, the VMS 8a accesses the subscriber's subscription details (including the subscriber's PIN). This may be done in a number of ways. If the subscriber's VMS 8a is directly connected only to the subscriber's local database 2a (as shown in Figure 1), and the local database 2a contains the subscription details, then the details may be easily acquired by transmitting a request (along with the PN) to the associated local database. Alternatively, if the VMS 8a is connected to a number of local databases and is constructed as shown in Figure 5a, the VMS 8a may look up the subscriber's local database in the field 45, which identifies the required local database containing the subscriber's details. In a further alternative the VMS 8a may interrogate the central database 1 to determine which local database holds the subscriber's details, or may obtain the details directly from the address 22 in central database 1.

8. The subscriber enters his PIN either by the terminal's DTMF keypad or by a personal tone generator.

9. The VMS 8a verifies the entered password against the subscriber's PIN. If the check fails, the customer may be given two more chances after which the call will be terminated and a report sent to the Customer Services desk.

If the verification check passes, the subscriber is requested to enter the new terminating address.

10. The subscriber enters the new terminating address (eg. 071 123 456) either by the terminal's DTMF keypad or by a personal tone generator.

11. If the new address violates the subscriber's registered subscription details as accessed in step 7 (e.g. international calls barred), the VMS 8a will indicate this and request that the subscriber enter a different number or terminate the call.

12. Otherwise, the VMS 8a repeats the new terminating address and requests that the subscriber verify the new number. If the new number repeated by the VMS 8a is correct, the subscriber may simply terminate the call or acknowledge the new number by entering a specific keypad digit (e.g. *); the latter will present the subscriber with other menu driven service options (e.g. voice mailbox access). If the repeated number is incorrect then the subscriber may reenter the required terminating address and the process is repeated from paragraph 10.

13. If the subscriber enters the required acknowledge digit, the VMS 8a initiates the menu driven service.

14. If the subscriber terminates then the VMS 8a will release all resources associated with the call.

In the case where the subscriber acknowledges the new terminating address (either explicitly or by terminating the call), the VMS 8a initiates a change to the terminating address of the subscriber, contained in the memory location 30.

To do this, the VMS will have a data link to the local database 2a. The VMS 8a sends the new terminating address to the local database 2a. The local database registers the new terminating address in the memory location 30 against the given personal number.

The subscriber may have additional personal numbers which are used to provide personal numbering for fax or computer data. The subscriber's current call routing information for fax or computer data may be stored in the same local database containing his current telephone routing information. Alternatively, additional local databases may be provided, each storing call routing information for a particular service, as shown in Figure 7.

Figure 7 shows three local databases 2a, 2e and 2f. 2a holds the subscriber's current telephone address, 2e holds the current fax address and 2f holds the current e-mail address. The one digit service identifier in the subscriber's personal number identifies which service (and corresponding database) is required. Therefore the numbering system is typically as follows:

DEF HIJKLM --- telephone call (request routed to local database 2a - see step 6 of figure 5).

DEG HIJKLM --- fax (request routed to local database 2e).

DER HIJKLM --- e-mail (request routed to local database 2f).

Note that the SID is the same in each case. This means that only a single SID needs to be published for each subscriber. However, the subscriber may be given more than one SID.

Figure 7 also shows two Closed User Group (CUG) local databases 2g and 2h. Where the caller and subscriber are members of a closed user group (CUG), the personal numbering format will be as follows:

HIJKLM (called number)

RST UVWXYZ (calling line identity)

The calling line identity (CLI) is automatically generated and identifies the caller as a member of a particular CUG. The caller may also be identified as being connected to a particular Private Branch Exchange (PBX). The CLI is used to route an inquiry to the central database. The central database recognises by the CLI that the incoming call is from a member of a particular CUG, and interrogates the local database associated with that CUG, which provides the current call routing information for the required member of the CUG (identified by the personal number HIJKLM).

Figure 1 shows an equal number of VMSs 8a-d and local databases 2a-d, with each VMS being connected with a particular local database. However, there is not necessarily a one-to-one relationship between these units. For example, in Figure 7 a single VMS 8d updates the subscriber's three local databases 2a, 2e and 2f. In addition, a single VMS 8e updates the two CUG local databases 2g, 2h.

## Claims

1. A communications system providing a call routing service in which each subscriber registered with the system is allocated a unique, published subscriber identification number (SID), the system comprising;
   i) a central database containing one or more fixed records for each subscriber registered with the system, each record corresponding to a particular subscriber having an address which includes the SID of that subscriber; and ii) one or more local databases, each containing a memory location permanently associated with a respective registered subscriber, and containing current call routing information for the subscriber,

wherein each fixed record in the central database includes the location of the local database containing the respective subscriber's call routing information, and wherein the or each local database is constructed to allow the current call routing information in the local database to be updated by the subscriber.

2. A system according to claim 1, wherein an incoming call to the subscriber is dialled using a personal number comprising the SID, a service identifier and a network identifier portion.

3. A system according to claim 1 or 2, wherein the current call routing information defines the terminating address of the registered subscriber for incoming telephone calls, fax calls and/or computer data.

4. A system according to any preceding claim, wherein at least one of the local databases is provided in a different country from the central database.

5. A system according to any preceding claim, wherein at least one of the local databases contains current call routing information for a Closed User Group.

6. A system according to any preceding claim, adapted for connection to a Public Switched Telephone Network (PSTN).

7. A system according to claim 6, further comprising a plurality of Transit Switching Points (TSPs) for connecting the system to local switches in the PSTN.

8. A system according to any of the preceding claims, further comprising a Voice Mail System (VMS) adapted to receive the subscriber's current call routing information, and update the subscriber's local database.

9. A system according to any of the preceding claims wherein each of the local databases holds current call routing information for a single service.

10. A system according to claim 9 wherein the services comprise telephone, fax and computer services.

11. A method of obtaining a subscriber's call routing information in a system according to any of the preceding claims, comprising the steps of;
    (i) receiving an incoming call dialled using an access number comprising the subscriber's SID;
    (ii) obtaining the location of the local database permanently associated with the access number by interrogating the corresponding fixed record in the central database; and
    iii) obtaining the subscriber's current call routing information by interrogating the corresponding memory location in the local database.

12. A method of routing a call using a system according to any of claims 1 to 10, comprising establishing a connection with the system via a telephone network by dialling an access number comprising a subscriber's SID, whereby the system causes the call to be routed in accordance with the subscriber's current call routing information.

13. A method according to claim 12, wherein the connection is established via a PSTN switch.

14. A method according to claim 12 , wherein the access number further comprises a service identifier portion.

15. A method according to claim 14 when dependent on claim 10, wherein the service identifier portion identifies the incoming call as telephone, fax or computer data.

16. A method of operating a system according to any of claims 1 to 10, comprising detecting an incoming call containing an access number comprising a subscriber's SID, carrying out a method according to claim 11 to obtain the subscriber's current call routing information by accessing the fixed record in the central database corresponding to the access number; and routing the incoming call in accordance with the subscriber's current call routing information.

17. A method according to claim 16 when dependent on claim 6 wherein the routing step comprises dropping the call back to a local PSTN switch, whereby the incoming call is routed through the PSTN using the current call routing information.

18. A method according to claim 17 when dependent on claim 7, wherein a TSP receives an incoming call request from a local PSTN switch, the TSP requests the subscriber's call routing information from the central database, the central database interrogates the subscriber's local database and provides the TSP with the subscriber's current routing information, and the TSP returns the routing information to the local switch for re-routing.

19. A method of operating a system according to any of claims 1 to 10, comprising updating a subscriber's current call routing information in response to an updating signal from the subscriber.

20. A method according to claim 19, wherein the updating step comprises periodically changing the current call routing information in a predetermined manner.

21. A method according to claim 20, wherein the current call routing information is changed in accordance with the time of day.

22. A method of updating a subscriber's current call routing information in a system according to any of claims 1 to 10, comprising making a telephone call to the system, and transmitting data defining the subscriber's new call routing information, whereby the subscriber's local database is updated with the new call routing information.

23. A method according to claim 22 wherein the updating telephone call is made from a country outside the country or countries containing the central database or local databases.

24. A method according to claim 23 when dependent on claim 8, wherein the updating telephone call is made to the subscriber's VMS.

# Fig.1.

# Fig.2.

# Fig.5.

CALL SET-UP TO PN AT REMOTE LOCATION

CONVERSATION

# Fig.3.

### CENTRAL DATABASE

| PERSONAL NUMBER | LOCAL DATABASE | PIN | DEFAULT NO. | VMS NO. |
|---|---|---|---|---|
| DEF HIJKLM | ABC | | | |
| DEF NOPQRST | ABC | | | |
| DER HIJKLM | XYZ | | | |

# Fig.4.

### LOCAL DATABASE

| SID | TERMINATING ADDRESS |
|---|---|
| HIJKLM | (071)123456 |

## Fig.5a.

| PERSONAL NUMBER | PIN | LD | NEW ADDRESS | OLD ADDRESS | BARRED NUMBER | |
|---|---|---|---|---|---|---|
| DEF HIJKLM | | ABC | 071 123456 | 071 789102 | 999 | |
| | | | | | | |
| | | | | | | |
| | | | | | | |

EP 0 649 265 A1

# Fig.6.

REMOTE PN
TELEPHONE

LOCATION UPDATING PROCEDURE

LOCAL
SWITCH —4d

VMS

LD

53

8a

2a

Call Set-Up Request
1 ————————————→ 2

3 ———— I(F)AM ————→ 4

Request for Personal Number
6 ←———————————————— 5

Personal Number keyed in by DTMF
————————————————→ 7

Request for Password
8 ←————————————————

Password keyed in by DTMF
————————————————→ 9

Request for new remote number
10 ←————————————————

Remote number keyed
————————————————→ 11

Remote Number Confirmation
12 ←————————————————

Remote Number Confirmation Acknowledge
————————————————→ 13

Call Release
14 ————————————————→

Request to store
15 ————————→ 16
new remote number against
existing Personal Number

# Fig.7.

VMS —8d

LD —2f

LD —2e

LD
2a

CD —1

CUG
LD
2h

CUG
LD
2g

VMS
8e

**European Patent Office**

# EUROPEAN SEARCH REPORT

**Application Number**

EP 94 30 7492

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | EP-A-0 498 594 (AMERICAN TELEPHONE AND TELEGRAPH) <br><br> * abstract; claims 1-4; figure 1 * <br> * column 4, line 26 - column 6, line 49 * | 1,6,7, 9-13, 16-19,22 | H04Q3/00 |
| Y | | 2-4,14, 15,23 | |
| D,Y | US-A-5 239 577 (BATES ET AL.) <br><br> * column 6, line 41 - column 7, line 64; figures 1,2 * | 2,3,14, 15 | |
| Y | AT & T TECHNICAL JOURNAL, <br> vol.71, no.5, September/October 1992, <br> SHORT HILLS US <br> pages 6 - 12, XP329801 <br> SYKES ET AL. 'Globalization of Intelligent Network services' <br> * page 10, left column, paragraph 2 - right column, paragraph 1; figures 1,4 * | 4,23 | |
| | | | **TECHNICAL FIELDS SEARCHED (Int.Cl.6)** |
| A | GLOBECOM '90, SESSION 402B, PAPER 5, <br> vol.1, 2 December 1990, SAN DIEGO US <br> pages 420 - 426, XP218765 <br> RÉGNIER ET AL. 'Personal Communication Services - the new POTS' <br> * section 3: 'System architecture and operation'; figure 3 * | 1,2, 11-13, 16-18,22 | H04Q |
| A | EP-A-0 433 465 (NIPPON TELEGRAPH AND TELEPHONE) <br><br> ----- | | |

The present search report has been drawn up for all claims

| Place of search | Date of completion of the search | Examiner |
|---|---|---|
| THE HAGUE | 20 January 1995 | Lambley, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)